# EUROPEAN PATENT APPLICATION

(11) **EP 4 447 543 A1**
(43) Date of publication of application: **16.10.2024**
(21) Application number: 22914378.9
(22) Date of filing: 20.12.2022
(51) Int. Cl.: H04W 28/22, H04L 1/00, H04L 49/10

(54) **DATA EXCHANGE METHOD, EXCHANGE DEVICE, AND PROCESSING DEVICE**

(30) Priority: 31.12.2021 CN 202111677329
(71) Applicant: Huawei Technologies Co., Ltd., Shenzhen, Guangdong 518129 (CN)
(72) Inventor: CHENG, Hao, Shenzhen, Guangdong 518129 (CN)
(74) Representative: Maiwald GmbH
(86) International application number: PCT/CN2022/140212
(87) International publication number: WO 2023/125124

(57) **Abstract**

This application provides a data switching method, a switching apparatus, and a processing apparatus. The method includes: A switching apparatus determines a first rate, where the first rate indicates a unit data amount of data that can be transmitted on a first tunnel within unit time, and the first tunnel is for transmitting enhanced common public radio interface eCPRI data; and the switching apparatus sends the eCPRI data to a processing apparatus at the first rate on the first tunnel within the unit time. Therefore, data transmission reliability can be improved.

## Description

This application claims priority to Chinese Patent Application No. 202111677329.8, filed with the China National Intellectual Property Administration on December 31, 2021 and entitled "DATA SWITCHING METHOD, SWITCHING APPARATUS, AND PROCESSING APPARATUS", which is incorporated herein by reference in its entirety.

### TECHNICAL FIELD

This application relates to the field of communication technologies, and more specifically, to a data switching method, a switching apparatus, and a processing apparatus.

### BACKGROUND

A deterministic delay of data transmission between two communication parties is an important parameter for implementing reliable scheduling of the data transmission. However, in a communication system of an Ethernet structure, data transmission is an asynchronous transfer mode based on receiving, storage, and forwarding of a packet or a data packet. There is no fixed communication link between the two communication parties, and data is sent only when the data needs to be sent. Therefore, in the communication system that uses the Ethernet structure, for example, a fronthaul communication system that uses an enhanced common public radio interface (enhanced common public radio interface, eCPRI), a determined value of a data transmission delay cannot be obtained, and a requirement for high-reliable data transmission cannot be met.

Therefore, a data switching method, a switching apparatus, and a processing apparatus are urgently needed, to improve data transmission reliability.

### SUMMARY

This application provides a data switching method, a switching apparatus, and a processing apparatus, to improve data transmission reliability.

According to a first aspect, a data switching method is provided. The method may be performed by a switching apparatus or a chip in the switching apparatus. The method includes:
The switching apparatus determines a first rate, where the first rate indicates a unit data amount of data that can be transmitted on a first tunnel within unit time, and the first tunnel is for transmitting enhanced common public radio interface eCPRI data; and the switching apparatus sends the eCPRI data to a processing apparatus at the first rate on the first tunnel within the unit time.

Alternatively, the switching apparatus establishes a first tunnel with a first rate, where the first rate indicates a unit data amount of data that can be transmitted on the first tunnel within unit time, and the first tunnel is for transmitting eCPRI data; and the switching apparatus sends the eCPRI data to a processing apparatus at the first rate on the first tunnel within the unit time.

Therefore, in this application, the switching apparatus can establish the first tunnel with the first rate for transmitting the eCPRI data, and send the eCPRI data to the processing apparatus on the first tunnel, so that a deterministic delay for transmitting the eCPRI data can be obtained, and data transmission reliability can be improved.

With reference to the first aspect, in some implementations of the first aspect, the method further includes: The switching apparatus determines a first data amount, where the first data amount is a difference obtained by subtracting a second data amount from the unit data amount, and the second data amount is a data amount of the eCPRI data within the unit time; and the switching apparatus sends non-eCPRI data within the unit time based on the first data amount.

Therefore, in this application, the switching apparatus can collect statistics about a data amount of the actually sent eCPRI data within the unit time, so that a part that is in a resource originally allocated to the eCPRI data and that is not occupied by the eCPRI data can be for sending the non-eCPRI data, thereby improving resource utilization.

With reference to the first aspect, in some implementations of the first aspect, the unit time is a slot.

Therefore, in this application, the eCPRI data can be transmitted at a granularity of a slot, and the eCPRI data and the non-eCPRI data can be transmitted by reusing the slot, thereby improving data transmission flexibility.

With reference to the first aspect, in some implementations of the first aspect, the eCPRI data includes first data and second data. That the switching apparatus sends the eCPRI data includes: The switching apparatus sends the first data to a first processing apparatus; and the switching apparatus sends the second data to a second processing apparatus.

Therefore, in this application, one switching apparatus can be directly connected to a plurality of processing apparatuses for data transmission, thereby improving data transmission flexibility.

With reference to the first aspect, in some implementations of the first aspect, the eCPRI data includes first data and second data. That the switching apparatus sends the eCPRI data includes: The switching apparatus sends the eCPRI data to a first processing apparatus. The method further includes: The switching apparatus sends indication information to the first processing apparatus, where the indication information indicates a transmission path of the first data and a transmission path of the second data.

Therefore, in this application, one switching apparatus can be cascaded to a plurality of processing apparatuses for data transmission, thereby providing flexibility of system data transmission.

According to a second aspect, a data switching method is provided. The method may be performed by a processing apparatus or a chip in the processing apparatus. The method includes: The processing apparatus receives, from a switching apparatus, enhanced common public radio interface eCPRI data that is sent at a first rate on a first tunnel within unit time, where the first rate indicates a unit data amount of data that can be transmitted on the first tunnel within the unit time, and the first tunnel is for transmitting the eCPRI data.

Therefore, in this application, the switching apparatus can establish the first tunnel with the first rate for transmitting the eCPRI data, and send the eCPRI data to the processing apparatus on the first tunnel, so that a deterministic delay for transmitting the eCPRI data can be obtained, and data transmission reliability can be improved.

With reference to the second aspect, in some implementations of the second aspect, the method further includes: The processing apparatus receives, from the switching apparatus, non-eCPRI data that is sent within the unit time.

With reference to the second aspect, in some implementations of the second aspect, the unit time is a slot.

With reference to the second aspect, in some implementations of the second aspect, the eCPRI data includes first data and second data. That the processing apparatus receives eCPRI data from a control apparatus includes: The processing apparatus receives the first data in the eCPRI data from the switching apparatus.

With reference to the second aspect, in some implementations of the second aspect, the eCPRI data includes first data and second data. The method further includes: The processing apparatus receives indication information from the switching apparatus, where the indication information indicates a transmission path of the first data and a transmission path of the second data.

According to a third aspect, a switching apparatus is provided. The apparatus includes a processing unit and a transceiver unit. The processing unit is configured to determine a first rate, where the first rate indicates a unit data amount of data that can be transmitted on a first tunnel within unit time, and the first tunnel is for transmitting enhanced common public radio interface eCPRI data. The transceiver unit is configured to send the eCPRI data to a processing apparatus at the first rate on the first tunnel within the unit time.

Therefore, in this application, the switching apparatus can establish the first tunnel with the first rate for transmitting the eCPRI data, and send the eCPRI data to the processing apparatus on the first tunnel, so that a deterministic delay for transmitting the eCPRI data can be obtained, and data transmission reliability can be improved.

With reference to the third aspect, in some implementations of the third aspect, the processing unit is further configured to determine a first data amount, where the first data amount is a difference obtained by subtracting a second data amount from the unit data amount, and the second data amount is a data amount of the eCPRI data within the unit time. The transceiver unit is further configured to send non-eCPRI data within the unit time based on the first data amount.

With reference to the third aspect, in some implementations of the third aspect, the unit time is a slot.

With reference to the third aspect, in some implementations of the third aspect, the eCPRI data includes first data and second data. The transceiver unit is specifically configured to send the first data to a first processing apparatus. The transceiver unit is specifically configured to send the second data to a second processing apparatus.

With reference to the third aspect, in some implementations of the third aspect, the eCPRI data includes first data and second data. The transceiver unit is specifically configured to send the eCPRI data to a first processing apparatus. The transceiver unit is further configured to send indication information to the first processing apparatus, where the indication information indicates a transmission path of the first data and a transmission path of the second data.

According to a fourth aspect, a processing apparatus is provided. The apparatus includes a processing unit and a transceiver unit. The transceiver unit is configured to receive, from a switching apparatus, enhanced common public radio interface eCPRI data that is sent at a first rate on a first tunnel within unit time, where the first rate indicates a unit data amount of data that can be transmitted on the first tunnel within the unit time, and the first tunnel is for transmitting the eCPRI data. The processing unit is configured to process the eCPRI data.

Therefore, in this application, the switching apparatus can establish the first tunnel with the first rate for transmitting the eCPRI data, and send the eCPRI data to the processing apparatus on the first tunnel, so that a deterministic delay for transmitting the eCPRI data can be obtained, and data transmission reliability can be improved.

With reference to the fourth aspect, in some implementations of the fourth aspect, the transceiver unit is further configured to receive, from the switching apparatus, non-eCPRI data that is sent within the unit time.

With reference to the fourth aspect, in some implementations of the fourth aspect, the unit time is a slot.

With reference to the fourth aspect, in some implementations of the fourth aspect, the eCPRI data includes first data and second data. The transceiver unit is specifically configured to receive the first data in the eCPRI data from the switching apparatus.

With reference to the fourth aspect, in some implementations of the fourth aspect, the eCPRI data includes first data and second data. The transceiver unit is further configured to receive indication information from the switching apparatus, where the indication information indicates a transmission path of the first data and a transmission path of the second data.

According to a fifth aspect, a communication apparatus is provided. The apparatus may include a processing unit, a sending unit, and a receiving unit. Optionally, the sending unit and the receiving unit may alternatively be a transceiver unit.

When the apparatus is a switching apparatus, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, so that the apparatus performs any method in the first aspect. When the apparatus is a chip in a switching apparatus, the processing unit may be a processor, and the sending unit and the receiving unit may be an input/output interface, a pin, a circuit, or the like. The processing unit executes instructions stored in the storage unit, so that the chip performs any method in the first aspect. The storage unit is configured to store the instructions. The storage unit may be a storage unit (for example, a register or a cache) in the chip, or may be a storage unit located outside the chip in the apparatus (for example, a read-only memory or a random access memory).

When the apparatus is a processing apparatus, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, so that the apparatus performs any method in the second aspect. When the apparatus is a chip in a processing apparatus, the processing unit may be a processor, and the sending unit and the receiving unit may be an input/output interface, a pin, a circuit, or the like. The processing unit executes instructions stored in the storage unit, so that the chip performs any method in the second aspect. The storage unit is configured to store the instructions. The storage unit may be a storage unit (for example, a register or a cache) in the chip, or may be a storage unit located outside the chip in the apparatus (for example, a read-only memory or a random access memory).

According to a sixth aspect, this application provides an apparatus, including a processor. The processor is coupled to a memory, and may be configured to execute instructions in the memory, to implement the method according to any one of the first aspect or the possible implementations of the first aspect, or implement the method according to any one of the second aspect or the possible implementations of the second aspect. The apparatus further includes the memory. The apparatus further includes a communication interface, and the processor is coupled to the communication interface.

In an implementation, the apparatus is a switching apparatus. When the apparatus is a switching apparatus, the communication interface may be a transceiver or an input/output interface.

In another implementation, the apparatus is a chip or a chip system disposed in a switching apparatus. When the apparatus is a chip or a chip system disposed in a switching apparatus, the communication interface may be an input/output interface.

In an implementation, the apparatus is a processing apparatus. When the apparatus is a processing apparatus, the communication interface may be a transceiver or an input/output interface.

In another implementation, the apparatus is a chip or a chip system disposed in a processing apparatus. When the apparatus is a chip or a chip system disposed in a processing apparatus, the communication interface may be an input/output interface.

The transceiver may be a transceiver circuit. The input/output interface may be an input/output circuit.

According to a seventh aspect, a computer-readable storage medium is provided. The computer-readable storage medium stores a computer program or instructions. When the computer program or the instructions are executed, the method in any possible implementation of the first aspect or the second aspect is implemented.

According to an eighth aspect, a computer program product including instructions is provided. When the instructions are run, the method in any possible implementation of the first aspect or the second aspect is implemented.

According to a ninth aspect, a computer program is provided. The computer program includes code or instructions. When the code or the instructions are run, the method in any possible implementation of the first aspect or the second aspect is implemented.

According to a tenth aspect, a chip system is provided. The chip system includes a processor, and may further include a memory, configured to implement the method in any possible implementation of the first aspect or the second aspect. The chip system may include a chip, or may include a chip and another discrete component.

According to an eleventh aspect, a communication system is provided. The system includes the apparatus in any possible implementation of the third aspect or the fourth aspect.

In some implementations, the switching apparatus is a baseband unit BU or a module or an apparatus in the BU, and the processing apparatus is a radio frequency unit RU or a module or an apparatus in the RU.

In some other implementations, the processing apparatus is a BU or a module or an apparatus in the BU, and the switching apparatus is an RU or a module or an apparatus in the RU.

### BRIEF DESCRIPTION OF DRAWINGS

FIG. 1 is a diagram of a structure of a communication system to which an embodiment of this application is applicable;
FIG. 2 is a diagram of several different baseband processing division manners to which an embodiment of this application is applicable;
FIG. 3 is diagrams of structures of a plurality of networking systems to which an embodiment of this application is applicable;
FIG. 4 is a diagram of a structure of an eCPRI protocol network architecture to which an embodiment of this application is applicable;
FIG. 5 is a schematic flowchart of a data switching method according to an embodiment of this application;
FIG. 6 is a diagram of bandwidth occupation of eCPRI data and non-eCPRI data;
FIG. 7 is a diagram of a structure of a switching system in a downlink direction according to an embodiment of this application; and
FIG. 8 and FIG. 9 are diagrams of structures of possible apparatuses according to embodiments of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a 5th generation (5th generation, 5G) system, a new radio (new radio, NR) system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine-to-machine (machine-to-machine, M2M) communication system, an internet of things (Internet of things, IoT) communication system, a vehicle-to-everything (vehicle-to-everything, V2X) communication system, an uncrewed aerial vehicle (unmanned aerial vehicle, UAV) communication system, or another communication system.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

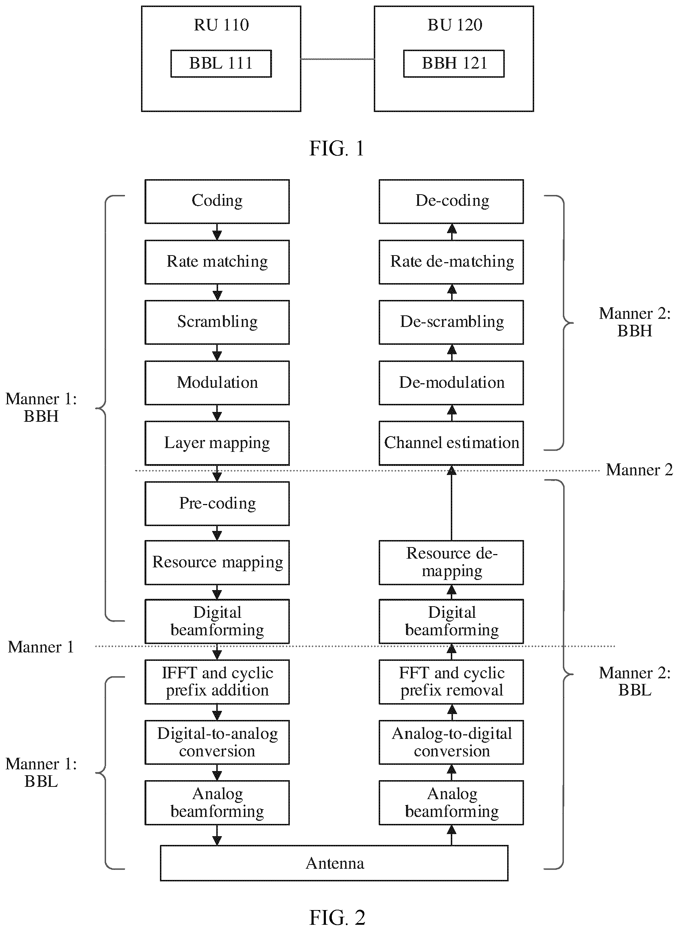

For ease of understanding of embodiments of this application, an application scenario of embodiments of this application is first described in detail with reference to FIG. 1.

FIG. 1 is a diagram of a structure of a communication system to which an embodiment of this application is applicable. An apparatus that may be involved in the communication system is first described.

1. Radio unit (radio unit, RU) 110: The RU 110 may implement functions such as intermediate frequency processing, radio frequency processing, and duplexing of a signal. For example, the RU 110 may be a remote radio unit (remote radio unit, RRU), an active antenna processing unit (active antenna unit, AAU), or another network element or communication apparatus that has a capability of processing an intermediate frequency signal, a radio frequency signal, or an intermediate radio frequency signal. In a communication system using an enhanced common public radio interface (enhanced common public radio interface, eCPRI), the RU 110 may include a baseband low (baseband low, BBL) 111. A baseband processing function that may be included in the BBL 111 is described in FIG. 2 with reference to FIG. 2. In embodiments of this application, the RU 110 may further include a switching unit. The switching unit may implement functions such as packet switching, distribution, scheduling, or control between apparatuses.

2. Baseband unit (baseband unit, BU) 120: The BU 120 may implement a function of processing a baseband signal. For example, the BU 120 may be a baseband unit (baseband unit, BBU), a central unit (central unit, CU), a distributed unit (distributed unit, DU), or another network element or communication apparatus that has a capability of processing a baseband signal. The BU 120 may include a baseband high (baseband high, BBH) 121, and a baseband processing function that may be included in the BBH 121 is described in FIG. 2 with reference to FIG. 2. In embodiments of this application, the BU 120 may further include a switching unit. The switching unit may implement functions such as packet switching, distribution, scheduling, or control between apparatuses.

A communication interface between the BU 120 and the RU 110 may be referred to as a fronthaul interface. For example, the fronthaul interface may be an eCPRI interface or another interface that is defined in the future and that is for connecting the BU 120 and the RU 110. The eCPRI interface may use a plurality of baseband processing division manners. When different baseband processing division manners are used, the BBL 111 and the BBH 121 may have different baseband processing functions.

FIG. 2 is a diagram of several different baseband processing division manners. Refer to FIG. 2. A BBL may be the BBL 111 shown in FIG. 1, and a BBH may be the BBH 121 shown in FIG. 1. First, an eCPRI interface may be obtained through division by using a baseband division manner in a manner 1. In the manner 1, in a downlink direction, the BBL may have functions of inverse fast Fourier transform (inverse fast Fourier transform, IFFT) and cyclic prefix addition (cyclic prefix addition), analog beamforming (analog beam forming), and digital-to-analog (digital to analog) conversion. In an uplink direction, the BBL may have functions of fast Fourier transform (fast Fourier transform, FFT) and cyclic prefix removal (cyclic prefix removal), analog beamforming (analog beam forming), and analog-to-digital (analog to digital) conversion. In a downlink direction, the BBH may have functions of coding (coding), rate matching (rate matching), scrambling (scrambling), modulation (modulation), layer mapping (layer mapping), pre-coding (pre-coding), resource mapping (resource element mapping), and digital beamforming (digital beam forming). In an uplink direction, the BBH may have functions of de-coding (de-coding), rate de-matching (rate de-matching), de-scrambling (de-scrambling), de-modulation (de-modulation), channel estimation (channel estimation)/equalization (equalization), inverse discrete Fourier transform (inverse discrete Fourier transform, IDFT), resource de-mapping (resource element de-mapping), and digital beamforming (digital beam forming).

The eCPRI interface may alternatively be obtained through division in a baseband division manner in a manner 2. Compared with the manner 1, in the manner 2, functions of pre-coding, resource mapping, and digital beamforming in a downlink direction are moved from the BBH to the BBL, and functions of resource de-mapping and digital beamforming in an uplink direction are moved from the BBH to the BBL.

It should be understood that the eCPRI interface may alternatively use another baseband division manner. Baseband division may be symmetric in the uplink direction and the downlink direction, or may be asymmetric in the uplink direction and the downlink direction. This is not particularly limited in this application. Embodiments of this application are applicable to a communication system with an eCPRI interface obtained in various baseband division manners.

A distributed base station usually includes at least one BU and at least one RU. Each RU corresponds to one sector, and provides a radio access service of a single frequency band or a plurality of frequency bands. The following describes networking between the BU and the RU with reference to FIG. 2.

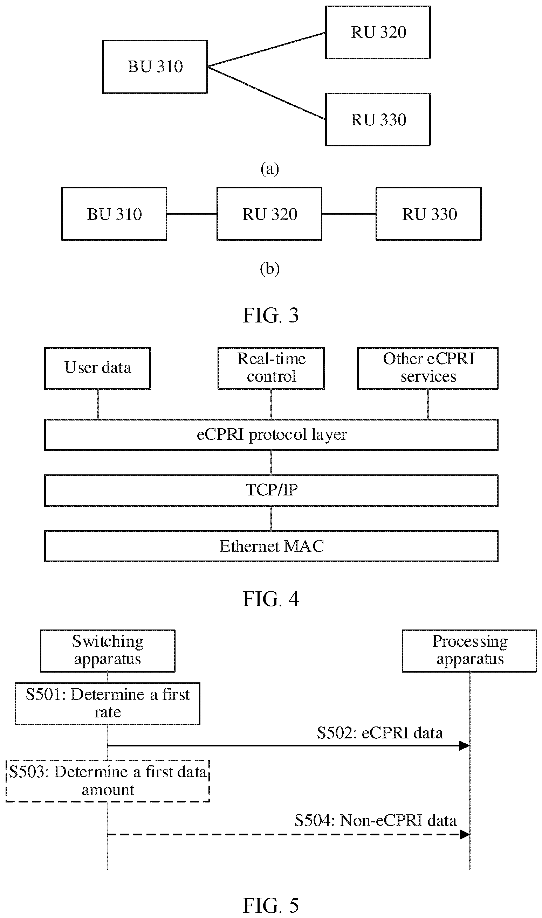

FIG. 3 is diagrams of structures of a plurality of networking systems to which an embodiment of this application is applicable. The system includes a BU 310, an RU 320, and an RU 330. Refer to (a) in FIG. 3. The BU 310 is directly connected to the RU 320 and the RU 330, to form direct networking. The BU and the RU directly communicate with each other through a fronthaul interface. Refer to (b) in FIG. 3. The BU 310 is directly connected to the RU 320, and the RU 320 is directly connected to the RU 330, to form cascaded networking. The BU 310 directly communicates with the RU 320. The BU 310 and the RU 330 may communicate with each other through transparent transmission or forwarding by the RU 320.

The foregoing describes only several networking systems to which embodiments of this application are applicable. Embodiments of this application may be further applicable to another networking system in which an RU and a BU can communicate with each other. This is not particularly limited in this application.

In a fronthaul communication system using an eCPRI protocol, data is transmitted between a BU and an RU by using an Ethernet transmission mechanism. The following describes an eCPRI protocol network architecture with reference to FIG. 4.

FIG. 4 is a diagram of a structure of an eCPRI protocol network architecture. An eCPRI protocol layer carries eCPRI services (eCPRI services), and the eCPRI services include user data (user data), real-time control (real-time control), and other eCPRI services (other eCPRI services). The eCPRI services may be carried at a transmission control protocol/internet protocol (transmission control protocol/internet protocol, TCP/IP) layer, or may be directly encapsulated at an Ethernet media access control (media access control, MAC) layer instead of a TCP/IP layer. No matter the eCPRI services are carried at the TCP/IP layer or the MAC layer, the architecture belongs to an Ethernet structure, and supports transmission of Ethernet frames.

Because the eCPRI protocol network architecture belongs to the Ethernet structure, and data is received, stored, and forwarded in a form of an Ethernet frame, a deterministic delay cannot be obtained, and a requirement for high-reliable data transmission cannot be met. Therefore, a data switching method is urgently needed, to improve data transmission reliability.

In the following embodiments, in a downlink direction (when eCPRI data is downlink data), a switching apparatus may be the foregoing BU or an apparatus or a module in the foregoing BU, and the processing apparatus may be the foregoing RU or an apparatus or a module in the foregoing RU. In an uplink direction (when eCPRI data is uplink data), a switching apparatus may be the foregoing RU or an apparatus or a module in the foregoing RU, and the processing apparatus may be the foregoing BU or an apparatus or a module in the foregoing BU.

FIG. 5 is a schematic flowchart of a data switching method 500.

S501: A switching apparatus determines a first rate, where the first rate indicates a unit data amount of data that can be transmitted on a first tunnel within unit time, and the first tunnel is for transmitting eCPRI data.

The eCPRI data may be valid data in an Ethernet frame, for example, user-plane user data. The user data may be presented as digital in-phase I and quadrature Q (IQ) data of an analog radio channel signal in baseband processing or intermediate frequency processing.

The first tunnel may be a connection-oriented communication link between the switching apparatus and a processing apparatus. The first rate (which may also be referred to as bandwidth) may indicate a data transmission capability of the first tunnel within the unit time.

For example, the switching apparatus may allocate, for transmitting the eCPRI data, a first tunnel having a fixed rate or a channel resource having a fixed rate between two communication parties. The eCPRI data is transmitted on the first tunnel by using a periodically appearing time unit as a carrier. Therefore, a communication system may determine a deterministic delay of transmitting the eCPRI data.

In a possible implementation, the switching apparatus may establish the first tunnel in a circuit switching manner. For example, the switching apparatus may establish, in the switching apparatus, a circuit path for transmitting the eCPRI data at the first rate. The circuit path is connected to a transceiver unit (for example, an eCPRI interface) that is in the switching apparatus and that is configured to send data. The eCPRI interface obtains the eCPRI data through the circuit path, and sends the eCPRI data at the first rate on the first tunnel.

### Optionally, the unit time is a slot.

For example, the switching apparatus may map the eCPRI data to one or more slots, and send the eCPRI data through the eCPRI interface by using the slot as a carrier.

Optionally, when the eCPRI data is included in the unit time, the switching apparatus determines the first rate. In other words, when the eCPRI data is included in one or more pieces of unit time, the switching apparatus establishes the first tunnel.

For example, the switching apparatus may determine whether the eCPRI data is included in one or more slots. When the eCPRI data is included in the one or more slots, the switching apparatus establishes the first tunnel for transmitting the eCPRI data. When the eCPRI data is not included in the one or more slots, the switching apparatus does not establish the first tunnel, and may release an existing first tunnel. In this case, the first rate originally configured for the first tunnel may be for transmitting other data.

Optionally, the switching apparatus determines the first rate based on a data amount of the eCPRI data in one or more time units.

For example, the switching apparatus may determine the first rate of the first tunnel based on a peak value or an average value of a quantity of bytes of the eCPRI data in each of one or more slots. It should be noted that, if the switching apparatus determines the first rate of the first tunnel based on a data amount of the eCPRI data in each of a plurality of slots, the first tunnel may keep transmitting the eCPRI data at the first rate in the plurality of slots.

S502: The switching apparatus sends the eCPRI data to the processing apparatus at the first rate on the first tunnel within the unit time. Correspondingly, the processing apparatus receives, from the switching apparatus, the eCPRI data that is sent at the first rate on the first tunnel within the unit time.

For example, the switching apparatus sends the eCPRI data at the first rate on the first tunnel in one or more slots through the eCPRI interface.

In a possible implementation, if the eCPRI data includes data of a plurality of types of eCPRI services, or includes a plurality of types of data such as data corresponding to a plurality of cells, the switching apparatus may perform time division multiplexing on the plurality of types of data, or the switching apparatus may send the eCPRI data on the first tunnel in a time division multiplexing manner.

It should be noted that, when the first tunnel that corresponds to the unit time and that is for transmitting the eCPRI data has a fixed rate, the unit data amount that can be transmitted on the first tunnel within the unit time corresponds to a product of the unit time and the first rate. However, a data amount of the eCPRI data carried within the unit time may be less than the unit data amount that can be transmitted on the first tunnel. In other words, the eCPRI data may not fully occupy the first rate allocated to the eCPRI data. In this case, a remaining time resource within the unit time may be further for transmitting other data. This is described below.

Optionally, in S503, the switching apparatus determines a first data amount, where the first data amount is a difference obtained by subtracting a second data amount from the unit data amount, and the second data amount is the data amount of the eCPRI data within the unit time.

For example, the switching apparatus may determine, based on the first rate, a unit data amount that can be carried in one slot, and then the switching apparatus determines a data amount occupied by the eCPRI data carried in the slot, where a data amount that can be further carried in the slot is the first data amount.

Optionally, in S504, the switching apparatus sends non-eCPRI data within the unit time based on the first data amount.

The non-eCPRI data may be invalid data or coordination data in the Ethernet frame, such as data of control-plane real-time control signaling or another eCPRI service, for example, a preamble or a frame interval.

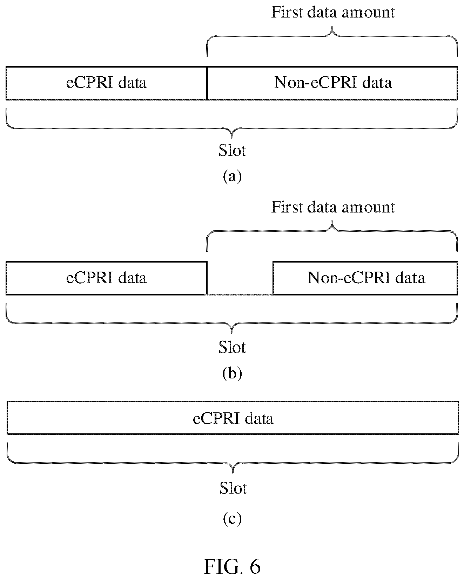

It should be understood that the switching apparatus may send non-eCPRI data of the first data amount or less than the first data amount. The following provides an example with reference to FIG. 6. FIG. 6 is a diagram of transmitting eCPRI data and non-eCPRI data in one slot. After the eCPRI data is transmitted at a fixed rate in the slot, refer to (a) in FIG. 6 and (b) in FIG. 6. A remaining resource in the slot may be for sending the non-eCPRI data. If the entire slot is occupied for the eCPRI data, refer to (c) in FIG. 6. In this case, the slot is not occupied for transmitting the non-eCPRI data.

In addition, it should be noted that the switching apparatus may send the non-eCPRI data to the processing apparatus, or may send the non-eCPRI data to another apparatus. For example, both the eCPRI data and the non-eCPRI data are transmitted through the eCPRI interface, and the first rate of the first tunnel is equal to all or a part of a first rate of the eCPRI interface. When the first rate of the first tunnel is not fully occupied, to be specific, when a resource originally allocated by the eCPRI interface to eCPRI data transmission within the unit time is not fully occupied, the non-eCPRI data may be transmitted through the eCPRI interface by occupying a part of the resource.

In a possible implementation, the non-eCPRI data may be transmitted in an Ethernet switching manner or a packet switching manner. It should be understood that, different from circuit switching, in packet switching, there is no communication tunnel between two communication parties that has a fixed rate and that is for transmitting the non-eCPRI data, and the switching apparatus may assemble data for sending only when the non-eCPRI data needs to be sent. Therefore, when the switching apparatus sends the eCPRI data, the eCPRI interface may obtain the eCPRI data by using a circuit path having a fixed rate, and send the eCPRI data at the fixed rate on the first tunnel, which may be understood as a synchronous data transfer mode. When the switching apparatus sends the non-eCPRI data, the eCPRI interface assembles data for sending when needing to send the non-eCPRI data, which may be understood as an asynchronous data transfer mode.

In a possible implementation, the switching apparatus may be connected to a plurality of processing apparatuses, and different data in the eCPRI data may be sent to different processing apparatuses. This is described below.

In a first implementation, the switching apparatus is a BU, and both a first processing apparatus and a second processing apparatus are RUs. They are connected to each other in the direct networking manner shown in (a) in FIG. 3. The eCPRI data includes first data and second data. In step S502, the switching apparatus sends the first data to the first processing apparatus, and the switching apparatus sends the second data to the second processing apparatus.

In a second implementation, the switching apparatus is a BU, and both a first processing apparatus and a second processing apparatus are RUs. They are connected to each other in the cascaded networking manner shown in (b) in FIG. 3. The first processing apparatus is directly connected to the switching apparatus, and the second processing apparatus is connected to the switching apparatus by using the first processing apparatus. The eCPRI data includes first data and second data. In step S502, the switching apparatus sends the eCPRI data and indication information to the first processing apparatus, where the indication information indicates a transmission path of the first data and a transmission path of the second data.

For example, the indication information may indicate the first processing apparatus to receive the first data and the second processing apparatus to receive the second data.

Alternatively, for another example, the indication information may indicate a destination address corresponding to the first data and a destination address corresponding to the second data. The first processing apparatus receives the eCPRI data, and obtains the first data from the eCPRI data based on the indication information. The first processing apparatus may send the eCPRI data and the indication information to the second processing apparatus, and the second processing apparatus obtains the second data from the eCPRI data based on the indication information. Alternatively, after extracting the first data, the first processing apparatus may send remaining data in the eCPRI data and the indication information to the second processing apparatus, and the second processing apparatus receives the second data from the first processing apparatus.

The foregoing describes the process in which the switching apparatus sends the eCPRI data to the processing apparatus. To describe more clearly a manner of transmitting the eCPRI data between the switching apparatus and the processing apparatus, the following provides descriptions by using an example of a switching system in which the switching apparatus and the processing apparatus are a BU and an RU respectively.

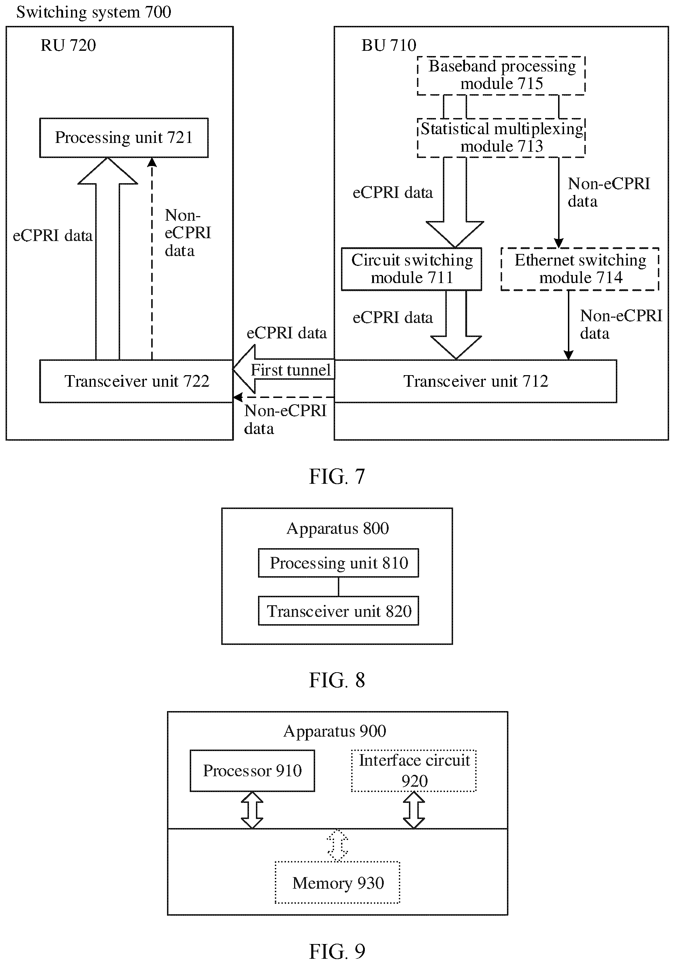

FIG. 7 is a diagram of a structure of a switching system 700 in a downlink direction.

The switching system 700 includes a BU 710 (an example of a switching apparatus) and an RU 720 (an example of a processing apparatus).

The BU 710 includes a circuit switching module 711 and a transceiver unit 712. The circuit switching module 711 is configured to determine a first rate, where the first rate indicates a unit data amount of data that can be transmitted on a first tunnel within unit time, and the first tunnel is for transmitting eCPRI data. The transceiver unit 712 is configured to send the eCPRI data to the processing apparatus at the first rate on the first tunnel within the unit time. The circuit switching module may be an IQ switch. When the first rate is determined, rate management at a fine granularity of increasing or decreasing a rate may be implemented.

Optionally, the BU 710 further includes a statistical multiplexing module 713. The statistical multiplexing module 713 is configured to determine a first data amount, where the first data amount is a difference obtained by subtracting a second data amount from the unit data amount, and the second data amount is the data amount of the eCPRI data within the unit time. The transceiver unit 712 is further configured to send non-eCPRI data within the unit time based on the first data amount.

Optionally, the BU 710 further includes an Ethernet switching module 714. The Ethernet switching module 714 is configured to determine non-eCPRI data sent within the unit time. For example, the Ethernet switching module 714 performs packet assembly on the non-eCPRI data, to determine the non-eCPRI data sent within the unit time.

Optionally, the BU 710 further includes a baseband processing module 715, and the baseband processing module 715 may implement a function of the foregoing BBH.

The circuit switching module 711, the statistical multiplexing module 713, the Ethernet switching module 714, and the baseband processing module 715 may be collectively referred to as a processing unit. For a specific implementation thereof, refer to the descriptions in the method 500. For brevity, details are not described herein again.

In a possible implementation, the circuit switching module 711 is electrically connected to the baseband processing module 715.

For example, the circuit switching module 711 and the baseband processing module 715 are encapsulated in a same hardware module.

In another possible implementation, the circuit switching module 711 is connected to the baseband processing module 715 through an Ethernet link.

Alternatively, the circuit switching module 711 is connected to the baseband processing module 715 through an optical fiber.

For example, the circuit switching module and the baseband processing module are encapsulated in different hardware modules, and the different hardware modules are connected by using an optical fiber.

Similarly, the RU 720 includes a processing unit 721 and a transceiver unit 722. The transceiver unit 722 is configured to receive, from the switching apparatus, the eCPRI data that is sent at the first rate on the first tunnel within the unit time. The processing unit 721 is configured to process the eCPRI data. For example, a processing function of the RU in FIG. 2 may be implemented. For a specific implementation thereof, refer to the descriptions in the method 500. For brevity, details are not described herein again.

It can be learned that the circuit switching module 711 may establish, between the BU 710 and the RU 720, the first tunnel for transmitting the eCPRI data, and the eCPRI data is transmitted on the first tunnel at a fixed rate within the unit time. The first tunnel may be connected to the transceiver unit 712 of the BU 710 and the transceiver unit 722 of the RU 720, and the transceiver unit 712 and the transceiver unit 722 may be corresponding eCPRI interfaces. The transceiver unit 712 may obtain the eCPRI data from a circuit path having the fixed rate. The circuit path may be established by the circuit switching module. In addition, it should be noted that, the circuit switching module 711 may establish, inside the BU 710, a path for transmitting the eCPRI data. The path connects the baseband processing module 715, the statistical multiplexing module 713, the circuit switching module 711, and the transceiver unit 712. When all connected modules are electrically connected, the path is formed by a circuit path. When the connected modules are deployed in different hardware modules connected by using an optical fiber, the path may be formed by a circuit and/or an optical fiber. This is not particularly limited in this application. The statistical multiplexing module 713 may collect statistics on the second data amount of the eCPRI data in a channel within the unit time, and determine the first data amount, so that the Ethernet switching module 714 can send the non-eCPRI data based on the first data amount.

FIG. 8 and FIG. 9 are diagrams of structures of possible apparatuses according to embodiments of this application. These apparatuses may be configured to implement functions of the switching apparatus and the processing apparatus in the foregoing method embodiment, and therefore can also implement beneficial effects of the foregoing method embodiment. In embodiments of this application, the apparatuses may be a switching apparatus and a processing apparatus, or may be modules (for example, chips) used in the switching apparatus and the processing apparatus.

As shown in FIG. 8, an apparatus 800 includes a processing unit 810 and a transceiver unit 820. The apparatus 800 is configured to implement a function of the processing apparatus in the method embodiment shown in FIG. 5. Alternatively, the apparatus 800 may include a module configured to implement any function or operation of the processing apparatus in the method embodiment shown in FIG. 5. The module may be all or partially implemented by using software, hardware, firmware, or any combination thereof.

When the apparatus 800 is configured to implement the function of the switching apparatus in the method embodiment shown in FIG. 5, the processing unit 810 is configured to determine a first rate, where the first rate indicates a unit data amount of data that can be transmitted on a first tunnel within unit time, and the first tunnel is for transmitting enhanced common public radio interface eCPRI data. The transceiver unit 820 is configured to send the eCPRI data to a processing apparatus at the first rate on the first tunnel within the unit time.

For more detailed descriptions of the processing unit 810 and the transceiver unit 820, directly refer to related descriptions in the method embodiment shown in FIG. 5. Details are not described herein again.

When the apparatus 800 is configured to implement the function of the processing apparatus in the method embodiment shown in FIG. 5, the transceiver unit 820 is configured to receive, from a switching apparatus, enhanced common public radio interface eCPRI data that is sent at a first rate on a first tunnel within unit time, where the first rate indicates a unit data amount of data that can be transmitted on the first tunnel within the unit time, and the first tunnel is for transmitting the eCPRI data. The processing unit 810 is configured to process the eCPRI data.

Therefore, in this application, the switching apparatus can establish the first tunnel with the first rate for transmitting the eCPRI data, and send the eCPRI data to the processing apparatus on the first tunnel, so that a deterministic delay for transmitting the eCPRI data can be obtained, and data transmission reliability can be improved.

For more detailed descriptions of the processing unit 810 and the transceiver unit 820, directly refer to related descriptions in the method embodiment shown in FIG. 5. Details are not described herein again.

As shown in FIG. 9, an apparatus 900 includes a processor 910, and optionally further includes an interface circuit 920. The processor 910 and the interface circuit 920 are coupled to each other. It may be understood that the interface circuit 920 may be a transceiver or an input/output interface. Optionally, the apparatus 900 may further include a memory 930, configured to store instructions executed by the processor 910, or store input data required by the processor 910 to run instructions, or store data generated after the processor 910 runs instructions.

When the apparatus 900 is configured to implement a function of the switching apparatus in the method embodiment in FIG. 5, the processor 910 is configured to implement a function of the foregoing processing unit 810, and the interface circuit 920 is configured to implement a function of the foregoing obtaining unit 820.

When the apparatus 900 is configured to implement a function of the processing apparatus in the method embodiment in FIG. 5, the processor 910 is configured to implement a function of the processing unit 810, and the interface circuit 920 is configured to implement a function of the transceiver unit 820.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, a terminal device, or another programmable apparatus. The computer programs or the instructions may be stored in a computer-readable storage medium, or may be transmitted through the computer-readable storage medium. The computer-readable storage medium may be any usable medium accessible by a computer, or a data storage device like a server integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that, in this application, both "when ..." and "if" mean that a network element performs corresponding processing in an objective situation, and are not intended to limit time. The terms do not mean that the network element is required to have a determining action during implementation, and do not mean any other limitation.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A data switching method, wherein the method comprises:
determining, by a switching apparatus, a first rate, wherein the first rate indicates a unit data amount of data that can be transmitted on a first tunnel within unit time, and the first tunnel is for transmitting enhanced common public radio interface eCPRI data; and
sending, by the switching apparatus, the eCPRI data to a processing apparatus at the first rate on the first tunnel within the unit time.

2. The method according to claim 1, wherein the method further comprises:
determining, by the switching apparatus, a first data amount, wherein the first data amount is a difference obtained by subtracting a second data amount from the unit data amount, and the second data amount is a data amount of the eCPRI data within the unit time; and
sending, by the switching apparatus, non-eCPRI data within the unit time based on the first data amount.

3. The method according to claim 1 or 2, wherein the unit time is a slot.

4. The method according to any one of claims 1 to 3, wherein the eCPRI data comprises first data and second data, and the sending, by the switching apparatus, the eCPRI data comprises:
sending, by the switching apparatus, the first data to a first processing apparatus; and
sending, by the switching apparatus, the second data to a second processing apparatus.

5. The method according to any one of claims 1 to 3, wherein the eCPRI data comprises first data and second data, and the sending, by the switching apparatus, the eCPRI data comprises:
sending, by the switching apparatus, the eCPRI data to a first processing apparatus; and
the method further comprises:
sending, by the switching apparatus, indication information to the first processing apparatus, wherein the indication information indicates a transmission path of the first data and a transmission path of the second data.

6. A data switching method, wherein the method comprises:
receiving, by a processing apparatus from a switching apparatus, enhanced common public radio interface eCPRI data that is sent at a first rate on a first tunnel within unit time, wherein the first rate indicates a unit data amount of data that can be transmitted on the first tunnel within the unit time, and the first tunnel is for transmitting the eCPRI data.

7. The method according to claim 6, wherein the method further comprises:
receiving, by the processing apparatus from the switching apparatus, non-eCPRI data that is sent within the unit time.

8. The method according to claim 6 or 7, wherein the unit time is a slot.

9. The method according to any one of claims 6 to 8, wherein the eCPRI data comprises first data and second data, and the receiving, by the processing apparatus, eCPRI data from a control apparatus comprises:
receiving, by the processing apparatus, the first data in the eCPRI data from the switching apparatus.

10. The method according to any one of claims 6 to 8, wherein the eCPRI data comprises first data and second data, and the method further comprises:
receiving, by the processing apparatus, indication information from the switching apparatus, wherein the indication information indicates a transmission path of the first data and a transmission path of the second data.

11. A switching apparatus, wherein the apparatus comprises a processing unit and a transceiver unit, wherein
the processing unit is configured to determine a first rate, wherein the first rate indicates a unit data amount of data that can be transmitted on a first tunnel within unit time, and the first tunnel is for transmitting enhanced common public radio interface eCPRI data; and
the transceiver unit is configured to send the eCPRI data to a processing apparatus at the first rate on the first tunnel within the unit time.

12. The apparatus according to claim 11, wherein
the processing unit is further configured to determine a first data amount, wherein the first data amount is a difference obtained by subtracting a second data amount from the unit data amount, and the second data amount is a data amount of the eCPRI data within the unit time; and
the transceiver unit is further configured to send non-eCPRI data within the unit time based on the first data amount.

13. The apparatus according to claim 11 or 12, wherein the unit time is a slot.

14. The apparatus according to any one of claims 10 to 14, wherein the eCPRI data comprises first data and second data;
the transceiver unit is specifically configured to send the first data to a first processing apparatus; and
the transceiver unit is specifically configured to send the second data to a second processing apparatus.

15. The apparatus according to any one of claims 10 to 14, wherein the eCPRI data comprises first data and second data;
the transceiver unit is specifically configured to send the eCPRI data to a first processing apparatus; and
the transceiver unit is further configured to send indication information to the first processing apparatus, wherein the indication information indicates a transmission path of the first data and a transmission path of the second data.

16. A processing apparatus, wherein the apparatus comprises a processing unit and a transceiver unit, wherein
the transceiver unit is configured to receive, from a switching apparatus, enhanced common public radio interface eCPRI data that is sent at a first rate on a first tunnel within unit time, wherein the first rate indicates a unit data amount of data that can be transmitted on the first tunnel within the unit time, and the first tunnel is for transmitting the eCPRI data; and
the processing unit is configured to process the eCPRI data.

17. The processing apparatus according to claim 16, wherein
the transceiver unit is further configured to receive, from the switching apparatus, non-eCPRI data that is sent within the unit time.

18. The apparatus according to claim 16 or 17, wherein the unit time is a slot.

19. The apparatus according to any one of claims 16 to 18, wherein the eCPRI data comprises first data and second data; and
the transceiver unit is specifically configured to receive the first data in the eCPRI data from the switching apparatus.

20. The apparatus according to any one of claims 16 to 18, wherein the eCPRI data comprises first data and second data; and
the transceiver unit is further configured to receive indication information from the switching apparatus, wherein the indication information indicates a transmission path of the first data and a transmission path of the second data.

21. A communication apparatus, comprising a processor, wherein the processor is coupled to a memory, the memory is configured to store a computer program or instructions, and the processor is configured to execute the computer program or the instructions to implement the method according to any one of claims 1 to 5 or claims 6 to 10.

22. A data switching system, comprising the switching apparatus according to any one of claims 11 to 15 and the processing apparatus according to any one of claims 16 to 20.
